# EUROPEAN PATENT SPECIFICATION

(11) **EP 2 246 806 B1**
(45) Date of publication and mention of the grant of the patent: **02.04.2014**
(21) Application number: 09005920.5
(22) Date of filing: 29.04.2009
(51) Int. Cl.: G06K 9/00

(54) **Vision method and system for automatically detecting objects in front of a motor vehicle**
Sichtverfahren und -system zur automatischen Erkennung von Objekten vor einem Kraftfahrzeug
Procédé de vision et système de détection automatique d'objets en face d'un véhicule à moteur

(43) Date of publication of application: 03.11.2010
(73) Proprietor: Autoliv Development AB, 44783 Vårgårda (SE)
(72) Inventor: Hedberg, Ognjan, 58222 Linköping (SE); Hammarström, Per Jonas, 58337 Linköping (SE)
(74) Representative: Müller Verweyen

(56) References cited:
- US-A1- 2008 312 831
- PENG CHANG, DAVID HIRVONEN, THEODORE CAMUS, BEN SOUTHALL: "Stereo-Based Object Detection, Classification, and Quantitative Evaluation with Automotive Applications" IEEE WORKSHOP ON MACHINE VISION FOR INTELLIGENT VEHICLES, IN CONJUNCTION WITH CONFERENCE ON COMPUTER VISION AND PATTERN RECOGNITION, [Online] 20 June 2005 (2005-06-20), - 20 June 2005 (2005-06-20) pages 1-6, XP002541816 San Diego, CA, USA Retrieved from the Internet: URL:http://ieeexplore.ieee.org/stamp/stamp .jsp?arnumber=01565366> [retrieved on 2009-08-18]
- BERTOZZI M ET AL: "A Night Vision Module for the Detection of Distant Pedestrians" INTELLIGENT VEHICLES SYMPOSIUM, 2007 IEEE, IEEE, PI, 1 June 2007 (2007-06-01), pages 25-30, XP031126916 ISBN: 978-1-4244-1067-5
- MASOUD O ET AL: "Tracking all traffic - Computer vision algorithms for monitoring vehicles, individuals, and crowds" IEEE ROBOTICS & AUTOMATION MAGAZINE, IEEE SERVICE CENTER, PISCATAWAY, NJ, US, vol. 12, no. 1, 1 March 2005 (2005-03-01), pages 29-36, XP011128702 ISSN: 1070-9932

## Description

The invention relates to a vision method for automatically detecting objects in front of a motor vehicle, comprising the steps of detecting images from a region in front of the vehicle by a vehicle mounted imaging means, generating a processed image, containing disparity or vehicle-to-scene distance information, from said detected images, comparing regions-of-interest of said processed image to template objects relating to possible objects in front of the motor vehicle, calculating for each template object a score relating to the match between said processed image and the template object, and identifying large scores of sufficient absolute magnitude of said calculated scores. The invention furthermore relates to a corresponding vision system.

Vision methods and systems of this kind are generally known, for example from US 7 263 209 B2 or from P. Chang et al., "Stereo-Based Object Detection, Classification, and Quantitative Evaluation with Automotive Applications", Proceedings of the IEEE Computer Society Conference on Computer Vision and Pattern Recognition, 2005. In these methods, templates of different size representing all kinds of objects to be detected are arranged at many different positions in the detected image corresponding to possible positions of an object in the scene. However, a large number of template objects to be processed increases the overall processing time. Due to the limited processing resources this can lead to a reduced detection efficiency Furthermore, although only the peak values of suffi-cient magnitude of said calculated match scores are regarded as a match, multiple detections for one object in the scene cannot be avoided completely. However, multiple detections for one object can confuse the driver and lead to a reduced acceptance of the system by the driver.

US 2008 312831 A1 discloses a vision method for automatically detecting objects in front of a motor vehicle, comprising recording images from a region in front of the vehicle by a vehicle mounted imaging means, and detecting objects like vehicles, pedestrians and bicyclists in the recorded images. The detected objects may be grouped based on a distance function. In one embodiment, pedestrians are grouped into large groups referred to as peletons. The peletons are then subdivided into smaller groups, which are treated as single objects.

M. Bertozzi ez al., "A Night Vision Module for the Detection of Distant Pedestrians", Proceedings of the IEEE Intelligent Vehicles Symposium, Turkey, June 13-15, 2007, discloses a related vision method for a motor vehicle.

The object of the invention is to provide a reliable, efficient and user friendly method and system for automatically detecting objects in front of a motor vehicle.

The invention solves this object with the features of the independent claims. By applying an algorithm adapted to identify groups of large scores and assigning an identified group of large scores to a single match object, multiple detections for the same object in the scene can be avoided and irritations of the driver for example by a confusing display can be prevented.

The invention uses template objects all having essentially the same size in the imaged scene. The use of template objects of only one size significantly reduces the number of template comparisons required, because only one template object has to be positioned at every position on the ground plane in the detected image. Multiple detections which are expected for larger objects are combined to a single match object by the grouping algorithm. Nevertheless the use of template objects all having essentially the same size in the imaged scene leads to a much faster template comparison procedure.

The size of the template objects is preferably adapted to the smallest object to be detected. More particular, all template objects preferably have a constant height and/or a constant width in the imaged scene. Preferably the invention uses only one sort of template objects.

Preferably all template objects have essentially the same height to width ratio, more preferably a height to width ratio larger than one, in particular a height and width corresponding to a small pedestrian like a child as the smallest object to be detected.

Advantageously the grouping algorithm can be applied in the score map which is used for identifying large values of sufficient magnitude of the calculated match scores.

Preferably one or more refinement steps may be applied to a detected match object. The refinement preferably comprises determining the true height of a detected object. This may be particularly useful if the template objects are arranged to stand on a ground plane in the detected scene and all template objects have the same height, because in this case the real height of a detected object cannot be extracted from the template matching and grouping process. The height determination may be based on a vision refinement algorithm, in particular an edge detection algorithm, applied to the detected image data.

Another refinement step may comprise classifying a detected object candidate into one or more of a plurality of object categories, for example pedestrian, other vehicle, large object, bicyclist etc., or general scene objects.

Furthermore, the grouping algorithm may comprise a plurality of grouping rules for different kind of object sizes. Based on which grouping rule fits to a particular group, a pre-classification of the object can be made.

In the following the invention shall be illustrated on the basis of preferred embodiments with reference to the accompanying drawings, wherein:

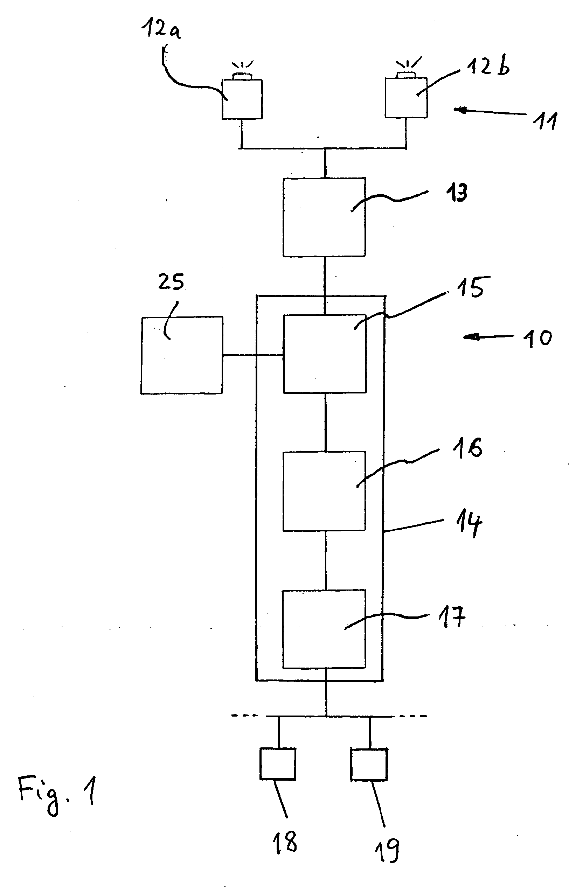

- Fig. 1: shows a schematic view of a vision system for a motor vehicle;
- Fig. 2: shows a simplified disparity image with matching tem- plate objects; and
- Fig. 3: shows a simplified score map for the disparity map shown in Fig. 2.

The vision system 10 is mounted in a motor vehicle and comprises an imaging means 11 for detecting images of a region in front of the motor vehicle. The imaging means 11 may be any arrangement capable of measuring data which allow the generation of depth and/or disparity images, as will be explained below, for example based on stereo vision, LIDAR, a 3D camera etc. Preferably the imaging means 11 comprises one or more optical and/or infrared cameras 12a, 12b, where infrared covers near IR with wavelengths below 5 microns and/or far IR with wavelengths beyond 5 microns. Preferably the imaging means 11 comprises two cameras 12a, 12b forming a stereo imaging means 11; alternatively only one camera forming a mono imaging means can be used.

The cameras 12a, 12b are coupled to an image pre-processor 13 adapted to control the capture of images by the cameras 12a, 12b, receive and digitize the electrical signal from the cameras 12a, 12b, warp pairs of left/right images into alignment and merge them into single images, and create multi-resolution disparity images, which per se is known in the art. The image pre-processor 13 may be realized by a dedicated hardware circuit. Alternatively the pre-processor 13, or part of its functions, can be realized in the electronic processing means 14.

The pre-processed image data is then provided to an electronic processing means 14 where further image and data processing is carried out by corresponding software. In particular, the processing means 14 comprises an object detection means 15 adapted to identify and preferably also classify possible object candidates in front of the motor vehicle, such as pedestrians, other vehicles, bicyclists or large animals, a tracking means 16 adapted to track over time the position of object candidates in the detected images identified by the object detection means 15, and a decision means 17 adapted to activate or control vehicle safety means 18, 19, ... depending on the result of the processing in the object detection and tracking means 15, 16. The electronic processing means 14 preferably has access to an electronic memory means 25.

The vehicle safety means 18, 19, ... may comprise a warning means 18 adapted to provide a collision warning to the driver by suitable optical, acoustical and/or haptical warning signals; display means 19 for displaying information relating to an identified object; one or more restraint systems such as occupant airbags or safety belt tensioners; pedestrian airbags, hood lifters and the like; and/or dynamic vehicle control systems such as brakes.

The electronic processing means 14 is preferably programmed or programmable and may comprise a microprocessor or microcontroller. The image pre-processor 13, the electronic processing means 14 and the memory means 25 are preferably realised in an on-board electronic control unit (ECU) and may be connected to the cameras 12a, 12b and the safety means 18, 19, ... via a vehicle data bus. All steps from imaging, image preprocessing, image processing to activation or control of safety means 18, 19, ... are performed automatically and continuously during driving in real time if the vision system 10 is switched on.

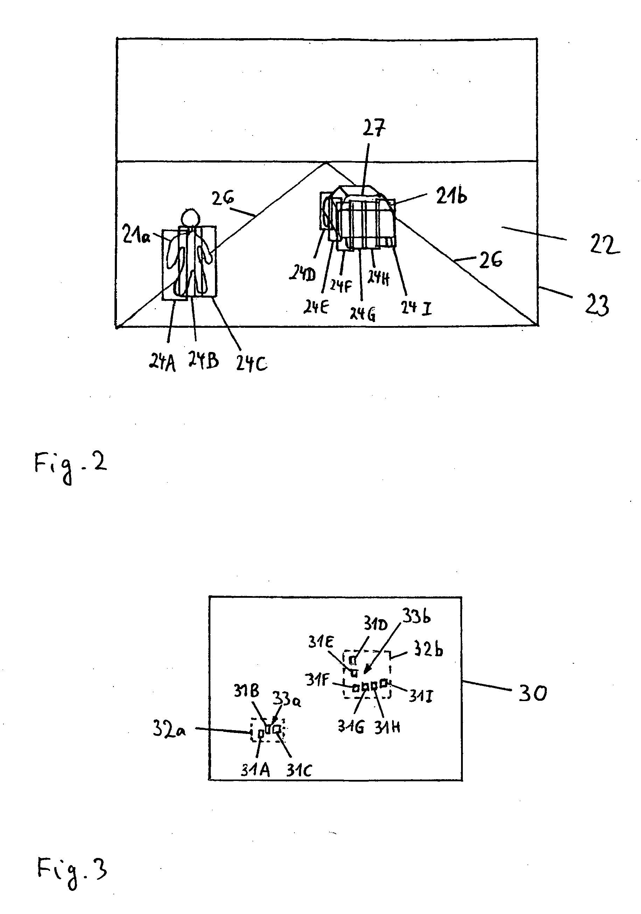

In the object detection means 15 preferably a disparity image or disparity map 23 is generated where an individual disparity value, representing a difference of the corresponding point in the scene in the left/right stereo images, is assigned to every pixel of the disparity map. A schematic view of an exemplary disparity map 23 with two objects 21a, 21b to be identified is shown in Fig. 2, where however the disparity values in the third dimension are not indicated. In reality the disparity image may for example be a greyscale image where the grey value of every pixel represents a distance between the corresponding point in the scene in the left/right stereo images.

Although the template objects to be described in the following are preferably matched to a disparity map, which has the advantage that the time-consuming calculation of a depth map can be avoided, it is also possible to match the pre-stored template objects to a calculated depth map where an individual depth value representing the distance of the corresponding point in the scene to the vehicle, obtained from the distance information contained in the disparity image, is assigned to every pixel of the depth map.

The disparity/depth image 23 is then compared in the object identifying means 15 to template images or template objects 24A, 24B, 24C, ... which may be contained in a template database pre-stored in the memory 25, or generated on-line by means of a corresponding algorithm. The template objects 24A, 24B, 24C, ... represent possible objects in front of the motor vehicle, or parts thereof. All template objects 24A, 24B, 24C, ... have the same shape, preferably rectangular, and are preferably two-dimensional multi-pixel images which are flat in the third dimension, i.e. only a constant value, for example a constant grey value, indicating the expected disparity or depth of the template object, is assigned to the template image as a whole.

Preferably the template objects 24A, 24B, 24C, ... are arranged to stand on a ground plane 22 of the detected scene in order to reasonably reduce the number of template objects required. In view of this the processing means 14 is preferably adapted to determine the ground plane 22 from the detected image data, for example by an algorithm adapted to detect the road edges 26. However, it is also possible to determine the ground plane 22 in advance by a measurement procedure. Furthermore, the template objects 24A, 24B, 24C, ... are preferably arranged orthogonally to a sensing plane which is an essentially horizontal, vehicle-fixed plane through the imaging sensors 12a, 12b.

All template objects 24A, 24B, ..., 24I, ... have a size which corresponds to an essentially fixed size in the detected scene at least in one, preferably in both dimensions of the template objects 24A, 24B, 24C, ... . This means that preferably the height of the template object times its distance to the vehicle is constant, and preferably the width of the template object times its distance to the vehicle is constant. For example, the height of each template object 24A, 24B, 24C, ... may correspond to a height of approximately 1 m in the detected scene, and/or the width of each template object 24A, 24B, 24C, ... may correspond to a width of approximately 0,3 m in the detected scene. The size of the template objects 24A, 24B, 24C, ... is preferably adapted to the size of the smallest object to be detected, for example a child. Preferably the height of the template objects 24A, 24B, 24C, ... is lower than 1,5 m and the width of the template objects 24A, 24B, 24C, ... lower than 0,8 m. More preferably, the height to width ratio of all template objects 24A, 24B, 24C, ... is constant, in particular larger than one, for example in the range of two to four.

In order to determine objects in the scene in front of the motor vehicle, template objects 24A, 24B, 24C, ... are arranged at given intervals preferably below 0,5 m, for example approximately 0,25 m, along the ground in the scene in the longitudinal and lateral directions in order to cover all possible positions of the object. In Fig. 2 only template objects 24A ... 24I matching with two exemplary objects 21a, 21b are shown; in practice hundreds of template objects 24A, 24B, 24C, ... may be used.

Every template image 24A, 24B, 24C, ... is then compared to the disparity/depth image 23 by calculation a difference between the disparity/depth values of the disparity/depth image 23 and the expected disparity/depth value of the template object, where the calculation is performed over a region-of-interest of the disparity/depth image 23 defined by the template object 24A, 24B, 24C, ... under inspection. A score indicating the match between the template object 24A, 24B, 24C, ... under inspection and the corresponding region-of-interest in the disparity/depth image 23 is then calculated, for example as the percentage of pixels for which the absolute magnitude of the above mentioned difference is smaller than a predetermined threshold.

A preferred method of identifying an object based on the above comparison is carried out in the following manner. For every template image 24A, 24B, 24C, ... the calculated score is saved to a score map 30, an example of which is shown in Fig. 3. In the score map 30, one axis (here the horizontal axis) corresponds to the horizontal axis of the detected image and the other axis (here the vertical axis) is the longitudinal distance axis. Therefore, the score map 30 may be regarded as a birds-eye view on the region in front of the vehicle. All calculated score values are inserted into the score map 30 at the corresponding position in form of a small patch field to which the corresponding score is assigned, for example in form of a grey value.

A step of identifying large score values of sufficient absolute magnitude in the complete score map 30 is then carried out in the object identification means 15, in particular by keeping only those scores which exceed a predetermined threshold and disregarding other score values, for example by setting them to zero in the score map 30. For the exemplary disparity map 23 shown in Fig. 2, the score map 30 after threshold discrimination is shown in Fig. 3, where for each object 21a, 21b to be identified, large score values 31A to 31C and 31D to 31I, respectively, corresponding to matching templates 24A to 24I, are left in the score map 30.

An algorithm adapted to suppress the score values not forming a local extremum (local maximum or local minimum depending on how the score is calculated) may be carried out, leaving left only the locally extremal score values or peak scores. However, this step is not strictly necessary and may in fact be omitted, since the effect of the non-extremum suppression can be achieved by the group identifying step explained below.

In the score map 30, for a single object 21a; 21b to be detected a plurality of large score values 31A, 31B, 31C; 31D to 31I may show up, where a single object for example may also be a group of pedestrians. This is particularly the case if only templates of one relatively small size are used as described above; for example for the pedestrian 21a three large scores 31A, 31B, 31C and for the vehicle 21b 6 six large scores 31D to 31I show up. In such case the display of a plurality of visual items corresponding to the plurality of matching template objects, or large scores, could be irritating for the driver.

In order to suppress such multiple detections, the object detection means 15 comprises a group identifying means for applying a group identifying algorithm, adapted to identify a group or cluster of matching template objects 24A to 24C; 24D to 24I, i.e. a plurality of matching template objects 24A to 24C; 24D to 24I proximate to each other in a ground plane of the detected scene, and assign an identified cluster of large scores to a single match object 21a, 21b. It is then possible to display only one visual item for each match object 21a, 21b which leads to a clear display and avoids irritations of the driver. A matching template object is one with a sufficiently large score value.

It should be noted that the group identifying algorithm, in contrast to non-extremum suppression, is able to identify a group of peak scores, i.e. local extrema in the score map, belonging together.

The group identifying algorithm can preferably be carried out in the score map 30. In this case the group identifying algorithm is adapted to identify a group or cluster 33a, 33b of large scores 31A to 31C; 31D to 31I, i.e. a plurality of large scores 31A to 31C; 31D to 31I proximate to each other in a ground plane of the detected scene. For example rectangular areas 32a, 32b can be positioned at regular intervals in the score map 30 and the group identifying algorithm decides whether a cluster of large scores is present or not depending on the number and/or relative arrangement of the large scores 31A, 31B, 31C, ... included in the area 32a, 32b under inspection.

Other ways of identifying clusters of large scores in the score map 30 may alternatively be applied, and in general other methods of identifying a cluster of matching template objects 24A, 24B, 24C, ... proximate to each other in a ground plane of the detected scene may alternatively be applied.

Preferably the group identifying algorithm comprises a plurality of group identifying rules corresponding to groups of different size. For example if a group identifying rule corresponding to a relatively small area 32a is applicable, the corresponding object 21a may be pre-classified as a relatively small object like a pedestrian or a pole; if a group identifying rule corresponding to a larger area 32b with dimensions in a specific range is applicable, the corresponding object 21b may be pre-classified as a larger object like a vehicle or a group of pedestrians, and so on.

A part of the detected image belonging to one group 24A-24C; 24D-24I may be split up into a plurality of object candidates, which may be sent to a classifying means provided in the processing means 14, in particular a trained classifier preferably based on pattern or silhouette recognition means like neural networks, support vector machines and the like. This allows to classify any identified group into different object categories like (group of) pedestrians, other vehicles, bicyclists, and so on. For example a mini-van sized object could yield four pedestrian candidate regions-of-interest to be sent to a pedestrian classifier, two vehicle candidate regions-of-interest sent to a vehicle classifier, and one mini-van candidate region-of-interest sent to a mini-van classifier.

Since in the embodiment of Fig. 2 all template objects 24A, 24B, 24C, ... have the same height and are arranged on the ground plane of the scene, the true height of the detected objects 21a, 21b is not known from the template matching and group identifying procedure. Therefore, the object detection means 15 may be adapted to apply a refinement algorithm to the image data in order to determine the true height of the detected objects 21a, 21b. For example a vision refinement algorithm may apply an edge determination algorithm for determining a top edge 27 of a detected object 21b.

## Claims

1. A vision method for automatically detecting objects of different sizes in front of a motor vehicle, comprising the steps of:
detecting images from a region in front of the vehicle by a vehicle mounted imaging means (11),
generating a processed image (23), containing disparity or vehicle-to-scene distance information, from said detected images,
comparing regions-of-interest of said processed image (23) to template objects (24A, 24B, 24C, ...) relating to possible objects (21a, 21b) in front of the motor vehicle,
calculating for each template object (24A, 24B, 24C, ...) a score relating to the match between said processed image (23) and the template object (24A, 24B, 24C, ...),
identifying large scores (31A, 31B, 31C, ...) of sufficient absolute magnitude of said calculated scores,
**characterized by**
applying an algorithm adapted to identify groups (31A-31C; 31D-31I) of said large scores, and assigning an identified group (31A-31C; 31D-31I) of large scores to a single match object (21a; 21b),
wherein all template objects (24A, 24B, 24C, ...) being constant-valued two-dimensional multi-pixel images have essentially the same size and shape in the scene, and wherein the size of the template objects is adapted to the size of the smallest object to be detected.

2. The method as claimed in claim 1, wherein all template objects (24A, 24B, 24C, ...) essentially have a size adapted to a small pedestrian like a child to be detected.

3. The method as claimed in any one of the preceding claims, wherein all template objects (24A, 24B, 24C, ...) essentially have a constant height in the imaged scene.

4. The method as claimed in any one of the preceding claims, wherein all template objects (24A, 24B, 24C, ...) essentially have a constant width in the imaged scene.

5. The method as claimed in any one of the preceding claims, wherein all template objects (24A, 24B, 24C, ...) have essentially the same height to width ratio.

6. The method as claimed in any one of the preceding claims, wherein said template objects (24A, 24B, 24C, ...) have a height to width ratio larger than one.

7. The method as claimed in any one of the preceding claims, wherein said group identifying algorithm is applied in a score map (30) corresponding to a birds-eye view on the region in front of the vehicle.

8. The method as claimed in any one of the preceding claims, comprising determining the height of a detected object (21a, 21b) by a vision refinement algorithm.

9. The method as claimed in any one of the preceding claims, comprising edge determination in the detected image.

10. The method as claimed in any one of the preceding claims, wherein said group identifying algorithm comprises a plurality of group identifying rules corresponding to groups of different sizes.

11. The method as claimed in claim 10, comprising the step of pre-classifying an identified group of large scores according to the group size.

12. The method as claimed in any one of the preceding claims, comprising the step of splitting a part of the detected image belonging to an identified group of large scores into a plurality of object candidates.

13. The method as claimed in claim 12, comprising the step of classifying an object candidate into one of a plurality of object categories.

14. A vision system for automatically detecting objects of different sizes in front of a motor vehicle, comprising:
a vehicle mounted imaging means (11) for detecting images from a region in front of the vehicle, and
an electronic processing means (14) arranged to carry out the steps of comparing regions-of-interest of a processed image (23), generated from said detected images and containing disparity or vehicle-to-scene distance information, to template objects (24A, 24B, 24C, ...) relating to possible objects (21a, 21b) in front of the motor vehicle; calculating for each template object (24A, 24B, 24C, ...) a score relating to the match between said processed image (23) and the template object (24A, 24B, 24C, ...) ; identifying large scores (31A, 31B, 31C, ...) of sufficient absolute magnitude of said calculated scores; and applying an algorithm adapted to identify groups (31A-31C; 31D-31I) of said large scores, and assigning an identified group (31A-31C; 31D-31I) of large scores to a single match object,
wherein all template objects (24A, 24B, 24C, ...) being constant-valued two-dimensional multi-pixel images have essentially the same size and shape in the scene, and wherein the size of the template objects is adapted to the size of the smallest object to be detected.

## Patentansprüche

1. Sichtverfahren zur automatischen Erkennung von Objekten unterschiedlicher Größe vor einem Kraftfahrzeug, das folgende Schritte umfasst:
Erfassen von Bildern aus einem Bereich vor dem Fahrzeug durch ein am Fahrzeug montiertes Abbildungsmittel (11),
Erzeugen eines verarbeiteten Bilds (23), das Informationen zur Disparität oder zum Abstand des Fahrzeugs zur Szene enthält, aus den erfassten Bildern,
Vergleichen von interessierenden Bereichen des verarbeiteten Bilds (23) mit Vorlagenobjekten (24A, 24B, 24C, ...), die sich auf mögliche Objekte (21 a, 21 b) vor dem Kraftfahrzeug beziehen,
für jedes Vorlagenobjekt (24A, 24B, 24C, ...) Berechnen eines Ergebnisses, das die Übereinstimmung zwischen dem verarbeiteten Bild (23) und dem Vorlagenobjekt (24A, 24B, 24C, ...) betrifft,
Erkennen von hohen Ergebnissen (31A, 31 B, 31C, ...) mit einer ausreichenden absoluten Höhe aus den berechneten Ergebnissen,
**gekennzeichnet durch**
das Anwenden eines Algorithmus, der so ausgelegt ist, dass er Gruppen (31A-31C; 31D-31I) mit den hohen Ergebnissen erkennt, und Zuordnen einer erkannten Gruppe (31A-31C; 31D-31I) mit hohen Ergebnissen zu einem einzelnen Übereinstimmungsobjekt (21 a; 21 b),
wobei sämtliche Vorlagenobjekte (24A, 24B, 24C, ...), die eidimensionale Multi-Pixel-Fesiwertbilder sind, im Wesentlichen dieselbe Größe und Form in der Szene aufweisen, und wobei die Größe der Vorlagenobjekte an die Größe des kleinsten zu erkennenden Objekts angepasst wird.

2. Verfahren nach Anspruch 1, wobei sämtliche Vorlagenobjekte (24A, 24B, 24C, ...) im Wesentlichen eine Größe aufweisen, die an einen kleinen Fußgänger wie ein zu erkennendes Kind angepasst ist.

3. Verfahren nach einem der vorhergehenden Ansprüche, wobei sämtliche Vorlagenobjekte (24A, 24B, 24C, ...) im Wesentlichen eine gleichbleibende Höhe in der abgebildeten Szene aufweisen.

4. Verfahren nach einem der vorhergehenden Ansprüche, wobei sämtliche Vorlagenobjekte (24A, 24B, 24C, ...) im Wesentlichen eine gleichbleibende Breite in der abgebildeten Szene aufweisen.

5. Verfahren nach einem der vorhergehenden Ansprüche, wobei sämtliche Vorlagenobjekte (24A, 24B, 24C, ...) im Wesentlichen dasselbe Höhe-Breite-Verhältnis aufweisen.

6. Verfahren nach einem der vorhergehenden Ansprüche, wobei die Vorlagenobjekte (24A, 24B, 24C, ...) ein Höhe-Breite-Verhältnis von über eins aufweisen.

7. Verfahren nach einem der vorhergehenden Ansprüche, wobei der Algorithmus zur Gruppenerkennung in einer Ergebniskarte (30) angewendet wird, die einer Vogelperspektive des Bereichs vor dem Fahrzeug entspricht.

8. Verfahren nach einem der vorhergehenden Ansprüche, das das Ermitteln der Höhe eines erkannten Objekts (21 a, 21 b) mit einem Bildverbesserungsalgorithmus umfasst.

9. Verfahren nach einem der vorhergehenden Ansprüche, das eine Kantenerkennung in dem erfassten Bild umfasst.

10. Verfahren nach einem der vorhergehenden Ansprüche, wobei der Algorithmus zur Gruppenerkennung eine Vielzahl von Gruppenerkennungsregeln umfasst, die Gruppen unterschiedlicher Größe entsprechen.

11. Verfahren nach Anspruch 10, das den Schritt des Vorsortierens einer erkannten Gruppe mit hohen Ergebnissen nach der Gruppengröße umfasst.

12. Verfahren nach einem der vorhergehenden Ansprüche, das den Schritt des Aufteilens eines Teils des erfassten Bilds, der zu einer erkannten Gruppe mit hohen Ergebnissen gehört, in eine Vielzahl von in Frage kommenden Objekten umfasst.

13. Verfahren nach Anspruch 12, das den Schritt des Einordnens eines in Frage kommenden Objekts in eine von einer Vielzahl von Objektkategorien umfasst.

14. Sichtsystem zur automatischen Erkennung von Objekten unterschiedlicher Größe vor einem Kraftfahrzeug, umfassend:
ein am Fahrzeug montiertes Abbildungsmittel (11) zum Erfassen von Bildern aus einem Bereich vor dem Fahrzeug, und
ein elektronisches Verarbeitungsmittel (14), das so angeordnet ist, dass es folgende Schritte ausführt: Vergleichen von interessierenden ereichen eines verarbeiteten Bilds (23), das aus den erfassten Bildern erzeugt wird und Informationen zur Disparität oder zum Abstand des Fahrzeugs zur Szene enthält, mit Vorlagenobjekten (24A, 24B, 24C, ...), die sich auf mögliche Objekte (21 a, 21 b) vor dem Kraftfahrzeug beziehen; für jedes Vorlagenobjekt (24A, 24B, 24C, ...) Berechnen eines Ergebnisses, das die Übereinstimmung zwischen dem verarbeiteten Bild (23) und dem Vorlagenobjekt (24A, 24B, 24C, ...) betri; Erkennen von hohen Ergebnissen (31A, 31 B, 31C, ...) mit einer ausreichenden absoluten Höhe aus den berechneten Ergebnissen; und Anwenden eines Algorithmus, der so ausgelegt ist, dass er Gruppen (31A-31C; 31D-311) mit den hohen Ergebnissen erkennt, und Zuordnen einer erkannten Gruppe (31 A-31C; 31D-311) mit hohen Ergebnissen zu einem einzelnen Übereinstimmungsobjekt,
wobei sämtliche Vorlagenobjekte (24A, 24B, 24C, ...), die eidimensionale Multi-Pixel-Festwertbilder sind, im Wesentlichen dieselbe Größe und Form in der Szene aufweisen, und wobei die Größe der Vorlagenobjekte an die Größe des kleinsten zu erkennenden Objekts angepasst ist.

## Revendications

1. Procédé de vision pour détecter automatiquement des objets de tailles différentes en face d'un véhicule à moteur, comprenant les étapes consistant à:
détecter des images d'une zone en face du véhicule par un moyen d'imagerie (11) monté sur véhicule,
générer une image traitée (23), contenant des informations de disparité ou de distance véhicule-scène, à partir desdites images détectées,
comparer des régions d'intérêt de ladite image traitée (23) avec des objets de gabarit (24A, 24B, 24C, ...) relatifs à des objets éventuels (21 a, 21 b) en face du véhicule à moteur,
calculer pour chaque objet de gabarit (24A, 24B, 24C, ...) un score relatif à la concordance entre ladite image traitée (23) et l'objet de gabarit (24a, 24B, 24C, ...),
identifier des scores élevés (31 A, 31 B, 31C, ...) de valeur absolue suffisante parmi lesdits scores calculés,
**caractérisé par**
l'application d'un algorithme adapté pour identifier des groupes (31A-31C ; 31D-31I) avec lesdits scores élevés, et attribuer un groupe à scores élevés identifié (31A-31C ; 31D-31I) à un objet concordant unique (21 a ; 21 b),
dans lequel tous les objets de gabarit (24A, 24B, 24C, ...) étant des images multi-pixels bidimensionnelles à valeur constante présentent essentiellement la même taille et forme dans la scène, et dans lequel la taille des objets de gabarit est adaptée à la taille de l'objet le plus petit destiné à être détecté.

2. Procédé selon la revendication 1, dans lequel tous les objets de gabarit (24A, 24B, 24C, ...) présentent essentiellement une taille adaptée à un petit piéton tel qu'un enfant destiné à être détecté.

3. Procédé selon l'une quelconque des revendications précédentes, dans lequel tous les objets de gabarit (24A, 24B, 24C, ...) présentent essentiellement une hauteur constante dans la scène imagée.

4. Procédé selon l'une quelconque des revendications précédentes, dans lequel tous les objets de gabarit (24A, 24B, 24C, ...) présentent essentiellement une largeur constante dans la scène imagée.

5. Procédé selon l'une quelconque des revendications précédentes, dans lequel tous les objets de gabarit (24A, 24B, 24C, ...) présentent essentiellement le même rapport hauteur/largeur.

6. Procédé selon l'une quelconque des revendications précédentes, dans lequel lesdits objets de gabarit (24A, 24B, 24C, ...) présentent un rapport hauteur/largeur supérieur à un.

7. Procédé selon l'une quelconque des revendications précédentes, dans lequel ledit algorithme d'identification de groupe est appliqué dans une carte de scores (30) correspondant à une perspective à vol d'oiseau de la zone en face du véhicule.

8. Procédé selon l'une quelconque des revendications précédentes, comprenant la détermination de la hauteur d'un objet détecté (21 a, 21 b) par un algorithme d'amélioration d'image.

9. Procédé selon l'une quelconque des revendications précédentes, comprenant la détermination des contours dans l'image détectée.

10. Procédé selon l'une quelconque des revendications précédentes, dans lequel ledit algorithme d'identification de groupe comprend une pluralité de règles d'identification de groupe correspondant à des groupes de tailles différentes.

11. Procédé selon la revendication 10, comprenant l'étape consistant à préclassifier un groupe à scores élevés identifié selon la taille du groupe.

12. Procédé selon l'une quelconque des revendications précédentes, comprenant l'étape consistant à diviser une partie de l'image détectée appartenant à un groupe à scores élevés identifié en une pluralité d'objets candidats.

13. Procédé selon la revendication 12, comprenant l'étape consistant à classifier un objet candidat dans l'une d'une pluralité de catégories d'objets.

14. Système de vision pour détecter automatiquement des objets de tailles différentes en face d'un véhicule à moteur, comprenant :
un moyen d'imagerie (11) monté sur véhicule pour détecter des images d'une zone en face du véhicule, et
un moyen de traitement électronique (14) agencé pour exécuter les étapes de comparaison de régions intérêt d'une image traitée (23), générée à partir desdites images détectées et contenant des informations de disparité ou de distance véhicule-scène, avec des objets de gabarit (24A, 24B, 24C, ...) relatifs à des objets éventuels (21 a, 21 b) en face du véhicule à moteur ; de calcul pour chaque objet de gabarit (24A, 24B, 24C, ...) d'un score relatif à la concordance entre ladite image traitée (23) et l'objet de gabarit (24A, 24B, 24C, ...) ; d'identification de scores élevés (31A, 31B, 31C, ...) de valeur absolue suffisante parmi les scores calculés ; et d'application d'un algorithme adapté pour identifier des groupes (31A-31C ; 31 D-31 I) avec lesdits scores élevés, et d'attribution d'un groupe à scores élevés identifié (31A-31C ; 31 D-31 I) à un objet concordant unique,
dans lequel tous les objets de gabarit (24A, 24B, 24C, ...) étant des images multi-pixels bidimensionnelles à valeur constante présentent essentiellement la même taille et forme dans la scène, et dans lequel la taille des objets de gabarit est adaptée à la taille de l'objet le plus petit destiné à être détecté.
